Europäisches Patentamt

European Patent Office

Office européen des brevets

(11) Veröffentlichungsnummer: **0 190 546**
**A1**

# (12) EUROPÄISCHE PATENTANMELDUNG

(21) Anmeldenummer: **85890033.5**

(22) Anmeldetag: **06.02.85**

(51) Int. Cl.⁴: **G 11 B 33/04**
**G 11 B 23/023**

(43) Veröffentlichungstag der Anmeldung:
**13.08.86  Patentblatt 86/33**

(84) Benannte Vertragsstaaten:
**AT BE CH DE FR GB IT LI NL SE**

(71) Anmelder: **Ernst Stadelmann Gesellschaft m.b.H.**
**Bahnhofstrasse 8**
**A-4070 Eferding(AT)**

(72) Erfinder: **Kirchner, Balthasar**
**Bahnhofstrasse 8**
**A-4070 Eferding(AT)**

(72) Erfinder: **Schleicher, Siegfried**
**Bahnhofstrasse 8**
**A-4070 Eferding(AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz(AT)**

(54) Aufnahmevorrichtung zum geordneten Aufbewahren plattenförmiger Gegenstände.

(57) Eine Aufnahmevorrichtung zum geordneten Aufbewahren plattenförmiger Gegenstände (1) weist einen Aufnahmekörper (3) mit Halterungen (2) für diese Gegenstände (1) auf.

Um ein übersichtliches und auch bequemes Einordnen und Heraussuchen der Gegenstände zu erreichen, sind einzelne, voneinander unabhängige Halterungen (2) vorgesehen, die jeweils für sich schwenkbar im Aufnahmekörper lagern.

FIG.1

EP 0 190 546 A1

Aufnahmevorrichtung zum geordneten Aufbewahren
plattenförmiger Gegenstände

Die Erfindung betrifft eine Aufnahmevorrichtung zum geordneten Aufbewahren plattenförmiger Gegenstände, wie Schallplatten, Disketten,
Magnetbandkassetten od. dgl., mit einem Halterungen für diese Gegenstände aufweisenden Aufnahmekörper.

Schallplatten, Kassetten od. dgl. plattenförmige Gegenstände werden der Ordnung halber
und wegen der günstigeren Platzverhältnisse
meist stehend aufbewahrt, wobei die dazu verwendeten bekannten Aufnahmevorrichtungen im
wesentlichen aus schachtel- oder gestellartigen Aufnahmekörpern bestehen, die durch Rippen,

- 2 -

Bügel, Zwischenwände u. dgl. Halterungen zum Einschieben der Gegenstände bilden. Die Platten od. dgl. können daher platzsparend nebeneinandergereiht werden, doch bleiben von den Platten in der entstehenden Plattenreihe allein die schmalen Rücken sichtbar, so daß die Kennzeichnung der einzelnen Platten nur unbefriedigend möglich ist und ihre Identifizierung Schwierigkeiten bereitet. Auf Grund der starren Reihenanordnung wird das Auffinden einzelner bestimmter Platten od. dgl. ein aufwendiges Unterfangen und wegen der engen Aneinanderreihung können einzelne Platten auch nur recht mühsam mit den Fingerspitzen erfaßt und aus den Halterungen herausgenommen werden.

Der Erfindung liegt daher die Aufgabe zugrunde, diese Mängel zu beseitigen und eine Aufnahmevorrichtung der eingangs geschilderten Art zu schaffen, die ein platzsparendes und übersichtliches Aufbewahren plattenförmiger Gegenstände erlaubt und außerdem eine bequeme Handhabung der Gegenstände beim Einordnen und Heraussuchen gewährleistet.

Die Erfindung löst diese Aufgabe dadurch, daß einzelne, voneinander unabhängige Halterungen vorgesehen sind, die jeweils für sich schwenkbar im Aufnahmekörper lagern. Durch ein einfaches Schwenken der Halterungen kann daher ein Großteil der jeweils in den Halterungen sitzenden Gegenstände sichtbar gemacht werden, was auf einen Blick die Identifizierung der einzelnen Gegenstände ermöglicht und außerdem genügend Spielraum für eine bequeme Handhabung der Gegenstände mit sich bringt. Die aneinandergereihten Halterungen können ähnlich wie Karteikarten schnell und mühelos durchgeblättern werden und bieten die Voraussetzung für ein schnelles, geschicktes Sortieren und Herausfinden von in die Halterungen passenden Gegenständen.

Zweckmäßig ist es, wenn die Halterungen als Steckeinsätze ausgebildet sind, die aus mit Steckfüßen in Lagerschlitze des Aufnahmekörpers anschlagbegrenzt einführbaren Haltetaschen od. dgl. bestehen. Es kommt zu einer einfachen, billigen Bauweise, wobei die Steckeinsätze je nach Bedarf in vorbereitete Lagerschlitze des Aufnahmekörpers eingesteckt werden können, so daß sich die Aufnahmekapazität der Vorrichtung an die jeweiligen Gegebenheiten anpassen und auch wunschgemäß erweitern läßt. Die Haltetaschen selbst können beliebig gestaltet sein, doch sollen sie die Vorderseite der Gegenstände in einem entsprechend großen Bereich sichtbar lassen oder eine größere Etikettiermöglichkeit bieten.

Weisen die Steckfüße einen Steg mit der Lagerschlitztiefe entsprechender Höhe aber der Lagerschlitzweite gegenüber geringerer Stärke auf, der endseitig in eine der Lagerschlitzweite angepaßten Rastverdickung übergeht, entsteht eine aufwandsarme Lagerung, die innerhalb eines entsprechenden, von den Maßunterschieden zwischen Steg und Schlitz abhängigen Bereiches die erforderliche Schwenkbewegung erlaubt. Die Rastverdickung, die in Schwenk-

- 4 -

stellung die Lagerschlitze hintergreift, verhindert dabei ein ungewolltes Herausziehen der Steckeinsätze, ermöglicht aber in vertikaler Richtung das bewußte Einsetzen und Auswechseln dieser Steckeinsätze.

In einer günstigen Ausgestaltung der Erfindung besitzen die Haltetaschen eine einem Vielfachen der Gegenstandsdicke entsprechende Breite und einen geneigten oder abgestuften Boden. So können auch mehrere Gegenstände gemeinsam in einer Haltetasche untergebracht werden, ohne daß dadurch die Übersichtlichkeit verlorengeht, da durch den geneigten oder abgestuften Boden eine Staffelung der Gegenstände innerhalb des Behälters gegeben ist.

An und für sich können beliebige Aufnahmekörper zum Einsetzen der Halterungen vorgesehen sein, doch werden meist wegen des damit verbundenen Schutzes Behälter als Aufnahmekörper dienen. Weisen dann die Steckeinsätze seitliche, den Behälterrand übergreifende Stütznasen od. dgl. auf, können auch bei geringerer Dimensionierung der Steckeinsätze Beschädigungen auf Grund unvorsichtiger Handhabung vermieden werden, da die Stütznasen einerseits die Steckeinsätze selbst verstärken und anderseits Grenzanschläge für die Schwenkbewegung bilden und damit einer Bruchgefahr für die Steckfüße durch zu starkes Schwenken vorbeugen.

Eine weitere Verbesserung der Übersichtlichkeit und Ordnung ist zu erreichen, wenn erfindungsgemäß die Halterungen, wie an sich bekannt, im Bereich eines freien Randes eine Setzleiste für

- 5 -

Sichtreiter od. dgl. bilden, so daß die Handhabung der Aufnahmevorrichtung gänzlich der einer
Kartei angeglichen werden kann.

In der Zeichnung ist der Erfindungsgegenstand
beispielsweise dargestellt, und zwar zeigen

Fig. 1 eine erfindungsgemäße Aufnahmevorrichtung
im Längsschnitt,

Fig. 2 einen Querschnitt nach der Linie II-II der

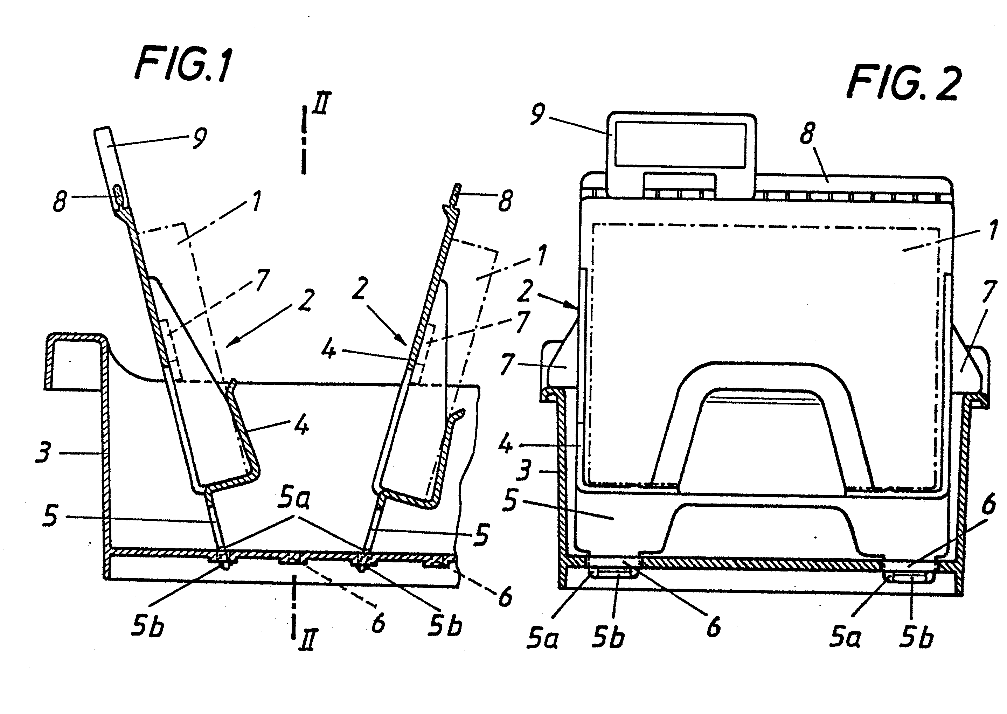

Fig. 1 und

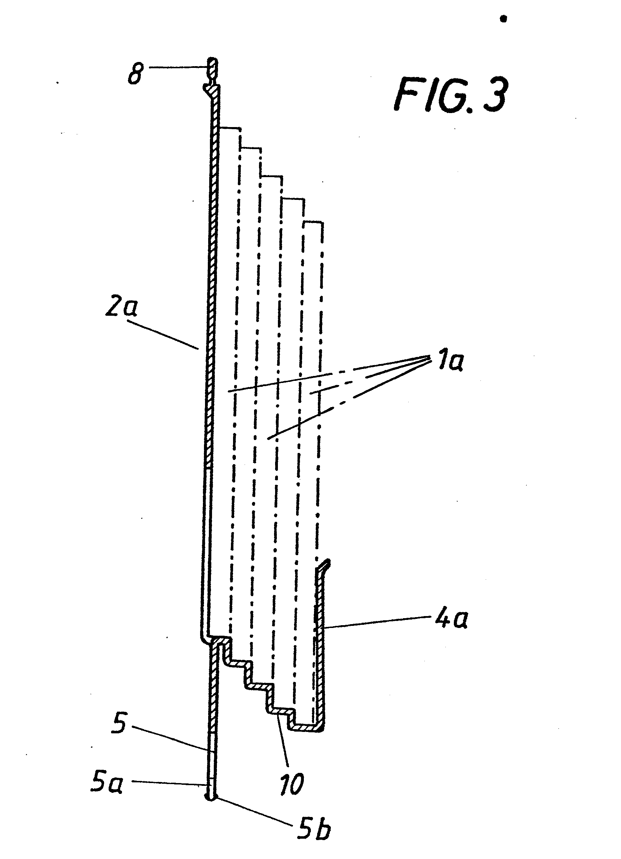

Fig. 3 ein anderes Ausführungsbeispiel eines Steckeinsatzes im Schnitt.

Um plattenförmige Gegenstände, beispielsweise
Magnetbandkassetten 1, übersichtlich aufbewahren
und geschickt ordnen zu können, sind für diese
Gegenstände einzelne, voneinander unabhängige,
als Steckeinsätze 2 ausgebildete Halterungen vorgesehen, die jeweils für sich schwenkbar in einem
Behälter 3, beispielsweise einer Lade oder einem
Kasten, gelagert sind. Dazu bestehen diese Steckeinsätze 2 aus einer Haltetasche 4, die mit einem
Steckfuß 5 in Lagerschlitze 6 des Behälterbodens
eingesetzt ist. Die Steckfüße 5 weisen einen
Steg 5a mit der Lagerschlitztiefe entsprechender
Höhe und eine an die Lagerschlitzweite angepaßte
Rastverdickung 5b auf, so daß sich zusammen mit
dem Lagerschlitz 6 ein Schwenklager ergibt. Zur
Sicherung und Verstärkung sind seitliche Stütznasen 7 am Steckeinsatz 2 angeordnet, wodurch
sich die Steckeinsätze 2 in den Endstellungen
des Schwenkbereiches am Behälterrand abstützen
und ein Bruch der Steckfüße 5 vermieden wird.

Die Steckeinsätze 2 nehmen in ihren Haltetaschen 4 die Magnetbandkassetten 1 od. dgl. gut sichtbar auf und erlauben auf Grund ihrer Schwenkbarkeit eine karteikartenartige Handhabung, die das Einordnen und Sortieren genauso wie das Auffinden und Entnehmen der einzelnen Gegenstände einfach und bequem macht. Um eine weitere Verbesserung der Übersichtlichkeit zu erreichen, können die Steckeinsätze 2 im Bereich ihres oberen Randes eine Setzleiste 8 zum Aufstecken eines Sichtreiters 9 tragen.

In Fig. 3 ist ein Steckeinsatz 2a angedeutet, der zur Aufnahme mehrerer, vorzugsweise dünnerer Gegenstände 1a, wie Disketten, Schallplatten od.dgl., geeignet ist. Diese Steckeinsätze 2a bilden Haltetaschen 4a mit gestuften Böden 10, damit durch Staffelung der einzelnen Gegenstände 1a innerhalb der Haltetasche 4a auch hier die einzelnen Gegenstände für sich entsprechend sichtbar und identifizierbar bleiben.

Patentansprüche :

1. Aufnahmevorrichtung zum geordneten Aufbewahren plattenförmiger Gegenstände (1, 1a), wie Schallplatten, Disketten, Magnetbandkassetten od. dgl., mit einem Halterungen (2) für diese Gegenstände (1, 1a) aufweisenden Aufnahmekörper (3), dadurch gekennzeichnet, daß einzelne, voneinander unabhängige Halterungen (2) vorgesehen sind, die jeweils für sich schwenkbar im Aufnahmekörper (3) lagern.

2. Aufnahmevorrichtung nach Anspruch 1, dadurch gekennzeichnet, daß die Halterungen als Steckeinsätze (2) ausgebildet sind, die aus mit Steckfüßen (5) in Lagerschlitze (6) des Aufnahmekörpers (3) anschlagbegrenzt einführbaren Haltetaschen (4) od. dgl. bestehen.

3. Aufnahmevorrichtung nach Anspruch 2, dadurch gekennzeichnet, daß die Steckfüße (5) einen Steg (5a) mit der Lagerschlitztiefe entsprechender Höhe aber der Lagerschlitzweite gegenüber geringerer Stärke aufweisen, der endseitig in eine der Lagerschlitzweite angepaßten Rastverdickung (5b) übergeht.

4. Aufnahmevorrichtung nach Anspruch 2 oder 3, dadurch gekennzeichnet, daß die Haltetaschen (4a) eine einem Vielfachen der Gegenstandsdicke entsprechende Breite und einen geneigten oder abgestuften Boden (10) besitzen.

5. Aufnahmevorrichtung nach einem der Ansprüche 1 bis 4, mit einem Behälter (3) als Aufnahmekörper, dadurch gekennzeichnet, daß die Steckeinsätze (2) seitliche, den Behälterrand übergreifende Stütznasen (7) od. dgl. aufweisen.

6.    Aufnahmevorrichtung nach einem der Ansprüche
1 bis 5, dadurch gekennzeichnet, daß die Halterungen, wie an sich bekannt, im Bereich eines
freien Randes eine Setzleiste (8) für Sichtreiter (9) od. dgl. bilden.

FIG.1

FIG.2

9

8

II

II

1

7

2

2

7

1

2

4

4

3

4

5

5

5a

5

5

5b

6

II

6

5b

9

8

1

7

2

7

4

3

5

6

5a

5b

6

5a

5b

1/2

0190546

0190546

# FIG.3

Europäisches
Patentamt

EUROPÄISCHER RECHERCHENBERICHT

**0190546**
Nummer der Anmeldung

EP 85 89 0033

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A-2 401 783 (RENT DESIGN)  * Ansprüche; Figuren * | 1,2,4, 5 | G 11 B 33/04  G 11 B 23/023 |
| X | EP-A-0 085 911 (AGFA-GEVAERT)  * Ansprüche; Figuren * | 1,2,5 | |
| X | DE-A-1 926 957 (GUTIERREZ)  * Ansprüche; Seite 6, Zeilen 7-9; Figuren * | 1,2,6 | |
| X | US-A-3 556 620 (GUTIERREZ)  * Spalte 2, Zeilen 10-47; Figuren * | 1 | |
| A | FR-A-2 127 857 (KIEVES)  * Ansprüch; Figuren * | 1,2 | RECHERCHIERTE SACHGEBIETE (Int. Cl.4) |
| A | US-A-4 366 904 (C.-E.B. ROSKVIST)  * Ansprüche; Figuren * | 1-3,6 | G 11 B  B 42 F |
| A | FR-A-2 547 244 (BIELLA-NEHER)  * Ansprüche; Figuren * | 1,2,6 | |
| A | WO-A-8 201 810 (INNOVATIVE CONCEPTS)  * Seite 4, Zeile 19 - Seite 5, Zeile 20; Figuren * | 1,2,5, 6 | |

---                  -/-

Der vorliegende Recherchenbericht wurde für alle Patentansprüche erstellt.

| Recherchenort | Abschlußdatum der Recherche | Prüfer |
|---|---|---|
| DEN HAAG | 08-10-1985 | DECLAT M.G. |

# 0190546

**Europäisches Patentamt**

## EUROPÄISCHER RECHERCHENBERICHT

| | EINSCHLÄGIGE DOKUMENTE | | Seite 2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| A | DE-A- 829 656 (FORTSCHRITT)<br>* Seite 2, Zeilen 32-40; Figur 3 * | 1,2,5 | |
| A | US-A-3 716 145 (J. GUTIERREZ)<br>--- | | |
| A | DE-A-2 335 965 (ORSCHLER)<br>--- | | |
| A | FR-A-2 381 633 (RENT DESIGN)<br>--- | | |
| A | CH-A- 188 340 (E. KELLER)<br>----- | | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 08-10-1985 | DECLAT M.G. |